(19) Europäisches Patentamt
European Patent Office
Office européen des brevets

(11) **EP 3 783 819 B1**

(12) **EUROPEAN PATENT SPECIFICATION**

(45) Date of publication and mention of the grant of the patent:
**29.11.2023 Bulletin 2023/48**

(51) International Patent Classification (IPC):
*H04J 99/00* (2009.01)  *H04L 27/02* (2006.01)
*H04W 8/24* (2009.01)  *H04W 74/02* (2009.01)
*G06F 17/00* (2019.01)  *H04L 5/00* (2006.01)
*G06F 11/30* (2006.01)  *H04J 11/00* (2006.01)
*H04L 25/03* (2006.01)

(21) Application number: **19192720.1**

(22) Date of filing: **20.08.2019**

(52) Cooperative Patent Classification (CPC):
**H04L 25/03165; H04J 11/0046; H04L 25/03331**

(54) **RADIO COMMUNICATION**

FUNKKOMMUNIKATION

COMMUNICATION RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2021 Bulletin 2021/08**

(73) Proprietor: **Nokia Technologies Oy**
**02610 Espoo (FI)**

(72) Inventors:
• **Acer, Utku Gunay**
 **2660 Hoboken (BE)**
• **Van den Broeck, Marc**
 **2860 Sint-Katelijne-Waver (BE)**
• **Mathur, Akhil**
 **London N17 9GE (GB)**

(74) Representative: **Swindell & Pearson Limited**
**48 Friar Gate**
**Derby DE1 1GY (GB)**

(56) References cited:
• SUN FUQIANG ET AL: "Deep Learning Based Joint Detection and Decoding of Non-Orthogonal Multiple Access Systems", 2018 IEEE GLOBECOM WORKSHOPS (GC WKSHPS), IEEE, 9 December 2018 (2018-12-09), pages 1-5, XP033519013, DOI: 10.1109/GLOCOMW.2018.8644090 [retrieved on 2019-02-19]

• YE NENG ET AL: "Deep Learning Aided Grant-Free NOMA Toward Reliable Low-Latency Access in Tactile Internet of Things", IEEE TRANSACTIONS ON INDUSTRIAL INFORMATICS, IEEE SERVICE CENTER, NEW YORK, NY, US, vol. 15, no. 5, 1 May 2019 (2019-05-01), pages 2995-3005, XP011722950, ISSN: 1551-3203, DOI: 10.1109/TII.2019.2895086 [retrieved on 2019-05-03]

• HUAWEI ET AL: "Discussion on the design of NOMA receiver", 3GPP DRAFT; R1-1813920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 13 November 2018 (2018-11-13), XP051480126, Retrieved from the Internet: URL:http://www.3gpp.org/ftp/tsg%5Fran/WG1%5FRL1/TSGR1%5F95/Docs/R1%2D1813920%2Ezip [retrieved on 2018-11-13]

• CUI JINGJING ET AL: "Unsupervised Learning Approaches for User Clustering in NOMA enabled Aerial SWIPT Networks", 2019 IEEE 20TH INTERNATIONAL WORKSHOP ON SIGNAL PROCESSING ADVANCES IN WIRELESS COMMUNICATIONS (SPAWC), IEEE, 2 July 2019 (2019-07-02), pages 1-5, XP033605675, DOI: 10.1109/SPAWC.2019.8815399 [retrieved on 2019-08-26]

- **YUAN YIFEI ET AL: "Non-orthogonal transmission technology in LTE evolution", IEEE COMMUNICATIONS MAGAZINE, IEEE SERVICE CENTER, PISCATAWAY, US, vol. 54, no. 7, 1 July 2016 (2016-07-01), pages 68-74, XP011617016, ISSN: 0163-6804, DOI: 10.1109/MCOM.2016.7509381 [retrieved on 2016-07-11]**

**Description**

TECHNOLOGICAL FIELD

Embodiments of the present disclosure relate to radio communication. Some examples, though without prejudice to the foregoing, relate to wirelessly retrieving context information from a plurality of user devices.

BACKGROUND

In radio communication systems, the radio spectrum is a scarce resource, and utilizing it efficiently is desirable. This can, for example, improve one or more of: capacity, latency and power consumption.

Conventional systems for retrieving user context data, e.g. a server retrieving user context data wirelessly from a user device, are not always optimal. Typical approaches to gathering user context data via a wireless communication network involve either a polling or pushing process wherein the user device accesses the wireless communication network and transmits its respective context data to the server.

While this approach may suffice for a small number of user devices, when the number of user devices increases, it introduces a burden on the wireless communication network, not least in overhead and network capacity. Conventional wireless communication networks have communication protocols, e.g. Medium Access Control (MAC) layer protocols, that regulate a transmitting device's access time to the wireless medium and transmission frequency in order to prevent two devices transmitting signals to the same receiving device at the same time with the same frequency (since signals transmitted from two devices at the same time with the same frequency would overlap and superimpose on top of one another thereby giving rise to constructive interference and collision of data packets that inhibits the decoding of the data packets of the separate transmissions simultaneously received at the receiving device). Typically, each user device would need to reserve access to the wireless communication network (e.g. reserve/be assigned its own transmission time slot(s) and/or its own transmission frequencies(s)) in order to transmit its respective user context data. Where there are significant numbers of user devices, this increases the regulating overhead of the wireless communication network and reduces the capacity of the wireless communication network and the amount of time its resources are available for use for other data communication.

It is useful to provide an apparatus, method, system and computer program for improved wireless retrieval of user context data.

SUN FUQIANG ET AL: "Deep Learning Based Joint Detection and Decoding of Non-Orthogonal Multiple Access Systems", 2018 IEEE, is a paper relating to applying Deep Learning techniques to joint multi-user detection and decoding of a non-orthogonal multiple system. A neural network detector and a decoder was constructed based on message passing algorithm and brief propagation algorithm, respectively. The decoder was cascaded with the detector to form a larger neural network. Weights were assigned to the edges of the respective factor graphs and deep learning approaches were used to train these weights to get better performance.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

BRIEF SUMMARY

The scope of protection sought for various embodiments of the invention is set out by the independent claims. The examples and features, if any, described in this specification that do not fall under the scope of the independent claims are to be interpreted as examples useful for understanding various embodiments of the invention.

According to at least some examples of the disclosure useful for understanding various embodiments of the invention, there is provided an apparatus comprising means configured to:

receive a wireless superposition signal, the wireless superposition signal comprising a plurality of wireless signals, received substantially simultaneously, that are individually transmitted from a respective plurality of devices substantially simultaneously and at the same frequency, wherein each of the wireless signals represents a set of parameter values of a set of parameters;

determine one or more sets of parameter values from the received wireless superposition signal by applying the wireless superposition signal to a model generated by a machine learning system, wherein the model is configured to:
receive, as an input, a wireless superposition signal comprising an aggregation of a plurality of wireless signals each representative of a set of parameter values of a set of parameters, wherein each parameter value is configured to adopt one of two values, wherein each of the plurality of wireless signals comprises:

a set of time slots respectively associated with the set of parameters, and

an analogue representation of the set of parameter values wherein:

one of the two values for a parameter is represented by a transmission of a pulse of a predetermined amplitude in a time slot associated with the parameter, and

the other of the two values for a parameter is represented by an absence of a transmission of a pulse in a time slot associated with the parameter value; and

output one or more sets of parameter values.

The apparatus may be for determining context information of a plurality of users in an area.

According to various, but not necessarily all, examples of the disclosure useful for understanding various embodiments of the invention, there is provided a method comprising:

receiving a wireless superposition signal, the wireless superposition signal comprising a plurality of wireless signals, received substantially simultaneously, that are individually transmitted from a respective plurality of devices substantially simultaneously and at the same frequency, wherein each each of the wireless signals represents a set of parameter values of a set of parameters;

determining one or more sets of parameter values from the received wireless superposition signal by applying the wireless superposition signal to a model generated by a machine learning system, wherein the model is configured to:
receiving, as an input, a wireless superposition signal comprising an aggregation of a plurality of wireless signals each representative of a set of parameter values of a set of parameters, wherein each parameter value is configured to adopt one of two values, wherein each of the plurality of wireless signals comprises:

a set of time slots respectively associated with the set of parameters, and

an analogue representation of the set of parameter values wherein:

one of the two values for a parameter is represented by a transmission of a pulse of a predetermined amplitude in a time slot associated with the parameter, and

the other of the two values for a parameter is represented by an absence of a transmission of a pulse in a time slot associated with the parameter value; and

outputting one or more sets of parameter values.

According to various, but not necessarily all, examples of the disclosure useful for understanding various embodiments of the invention, there is provided computer program instructions which, when run on a computer, cause an apparatus to perform:

receiving a wireless superposition signal, the wireless superposition signal comprising a plurality of wireless signals, received substantially simultaneously, that are individually transmitted from a respective plurality of devices substantially simultaneously and at the same frequency, wherein each of the wireless signals represents a set of parameter values of a set of parameters;

determining one or more sets of parameter values from the received wireless superposition signal by applying the wireless superposition signal to a model generated by a machine learning system, wherein the model is configured to:
receiving, as an input, a wireless superposition signal comprising an aggregation of a plurality of wireless signals each representative of a set of parameter values of a set of parameters, wherein each parameter value is configured to adopt one of two values, wherein each of the plurality of wireless signals comprises:

a set of time slots respectively associated with the set of parameters, and

an analogue representation of the set of parameter values wherein:

one of the two values for a parameter is represented by a transmission of a pulse of a predetermined amplitude in a time slot associated with the parameter, and

the other of the two values for a parameter is represented by an absence of a transmission of a pulse in a time slot associated with the parameter value; and

outputting one or more sets of parameter values.

According to various, but not necessarily all, examples of the disclosure useful for understanding various embodiments of the invention, there is provided an apparatus comprising at least one processor; and

at least one memory including computer program instructions;

the at least one memory and the computer program instructions configured to, with the at least one processor, cause the apparatus at least to perform:

receiving a wireless superposition signal, the wireless superposition signal comprising a plurality of wireless signals, received substantially simultaneously, that are individually transmitted from a respective plurality of devices substantially simultaneously and at the same frequency, wherein each signal represents a set of parameter values of a set of parameters;
determining one or more sets of parameter values from the received wireless superposition signal by applying the wireless superposition signal to a model, wherein the model is configured to:

receiving, as an input, a wireless superposition signal comprising an aggregation of a plurality of signals each representative of a set of parameter values of a set of parameters, and

outputting one or more sets of parameter values.

According to various, but not necessarily all, examples of the disclosure useful for understanding various embodiments of the invention, there is provided a nontransitory computer readable medium encoded with instructions that, when performed by at least one processor, causes at least the following to be performed:

receiving a wireless superposition signal, the wireless superposition signal comprising a plurality of wireless signals, received substantially simultaneously, that are individually transmitted from a respective plurality of devices substantially simultaneously and at the same frequency, wherein each signal represents a set of parameter values of a set of parameters;

determining one or more sets of parameter values from the received wireless superposition signal by applying the wireless superposition signal to a model, wherein the model is configured to:

receiving, as an input, a wireless superposition signal comprising an aggregation of a plurality of signals each representative of a set of parameter values of a set of parameters, and

outputting one or more sets of parameter values.

According to at least some examples of the disclosure useful for understanding various embodiments of the invention, there is provided an apparatus comprising means configured to:

determine a context of a user;

determine context parameter values of the user based on the determined context;

generate a context signal, the context signal representing a set of context parameter values of a user;

transmit the context signal in response to receipt of a context signal request.
According to various, but not necessarily all, examples of the disclosure there is provided a method comprising: determining a context of a user;

determining context parameter values of the user based on the determined context;

generating a context signal, the context signal representing a set of context parameter values of a user;

transmitting the context signal in response to receipt of a context signal request.

According to various, but not necessarily all, examples of the disclosure useful for understanding various embodiments of the invention, there is provided computer program instructions for causing an apparatus to perform:

determining a context of a user;

determining context parameter values of the user based on the determined context;

generating a context signal, the context signal representing a set of context parameter values of a user;

transmitting the context signal in response to receipt of a context signal request.

According to various, but not necessarily all, examples of the disclosure useful for understanding various embodiments of the invention, there is provided a chipset comprising processing circuitry configured to perform the above-mentioned methods.
According to various, but not necessarily all, examples of the disclosure useful for understanding various embodiments of the invention, there is provided a module, device and/or system comprising means for performing the above-mentioned methods.
The following portion of this 'Brief Summary' section describes various features that can be features of any of the embodiments described in the foregoing portion of the 'Brief Summary' section.
In some but not necessarily all examples, the plurality of signals is a plurality of analogue signals.
In examples, each parameter value is configured adopt one of two values.
In some but not necessarily all examples, the model is a mathematical model, generated via a machine learning system, that has been trained on data representative of sets of parameter values, so as to determine one or more correlations between features of the superposition signal and sets of parameter values.

In some but not necessarily all examples, the apparatus further comprises means to determine one or more groups of users having one or similar parameter values.

In some but not necessarily all examples, the wireless superposition signal is a superposed context signal comprising a plurality of wireless context signals received substantially simultaneously and at the same frequency that are individually transmitted/broadcasted from a respective plurality of devices substantially simultaneously and at the same frequency, wherein each context signal represents a set of context parameter values of a set of context parameters of a user; wherein the apparatus comprises means configured to determine one or more groups of users having one or more similar context parameter values.

In some but not necessarily all examples, the apparatus further comprises means configured to transmit, to the plurality of devices, a request for one or more signals.

In some but not necessarily all examples, the apparatus further comprises means configured to determine additional information from one or more other transmissions of one or more of the plurality of devices and using such additional information in determining one or more parameter values of one or more users.

According to various, but not necessarily all, examples of the disclosure there are provided examples as claimed in the appended claims.

BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:

FIG. 1 shows an example embodiment of the subject matter described herein;

FIG. 2 shows another example embodiment of the subject matter described herein;

FIG. 3 shows another example embodiment of the subject matter described herein;

FIG. 4 shows another example embodiment of the subject matter described herein;

FIG. 5 shows another example embodiment of the subject matter described herein;

FIG. 6 shows another example embodiment of the subject matter described herein;

FIG. 7 shows another example embodiment of the subject matter described herein;

FIG. 8 shows another example embodiment of the subject matter described herein; and

FIG. 9 shows another example embodiment of the subject matter described herein;

The Figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

The Figures schematically illustrate an apparatus 800,240 comprising means 801 configured to:

receive a wireless superposition signal 230, the wireless superposition signal 230 comprising a plurality of wireless signals 221,222,223, received substantially simultaneously, that are individually transmitted from a respective plurality of devices 2011,2022,2033 substantially simultaneously and at the same frequency, wherein each signal 221,222,223 represents a set of parameter values 111,112,113,114 of a set of parameters 1101,1102,1103,1104;

determine one or more sets of parameter values 211',212',213',214' from the received wireless superposition signal 230 by applying the wireless superposition signal 230 to a model 600, wherein the model 600 is configured to:

receive, as an input, a wireless superposition signal comprising an aggregation of a plurality of signals each representative of a set of parameter values of a set of parameters, and

output one or more sets of parameter values.

For the purposes of illustration and not limitation, in various, but not necessarily all, examples, the wireless superposition signal is a superposed context signal comprising a plurality of wireless context signals, received substantially simultaneously and at the same frequency, that are individually transmitted from a respective plurality of devices substantially simultaneously and at the same frequency. Each context signal represents a set of context parameter values of a set of context parameters of a user - such a set of context parameter values may represent a context of the user.

The model may be a mathematical model trained on data to make decisions, e.g. decomposing the superposition signal into constituent signals. The model may be a context model generated via a Machine Learning (ML) system, that has been trained on data representative of sets of parameter values, so as to determine one or more correlations between characteristics of the wireless superposition signal and sets of parameter values. The use of such a trained machine learnt model/algorithm enables a decomposition/disambiguation of the superposed context signal into its constituent separate context signals and hence a determination of the individual sets of context values from each device. In some examples, machine learnt model/algorithm is trained so as to determine one or more clusters of context values derived from the superposed context signal and hence an identification of one or more groups of users and the context values of such groups.

Examples of the disclosure may enable the retrieval of context information from user devices in an efficient manner. Without limiting the scope of the claims, a technical advantage/technical effect of various, but not necessarily all, examples of the present disclosure can be to enable the gathering of context information from plural devices in an efficient manner that reduces wireless communication resources/overhead. Instead of receiving a context signal from each device separately (i.e. at its own reserved/assigned timeslot and/or frequency), examples of the disclosure permit simultaneous transmission of plural context signals and the superposition of the same in their simultaneous reception as a superposed context signal.

A conventional context data retrieval, e.g. at an application layer, would require every user device to install the same application that captures a user context and sends it to a server, where the context data is processed. Each user device would send its user context separately. For example, if there were 1000 people in a public square, in a conventional application level approach, one would need 1000 round trip times to collect the all users' context information, i.e. from each of the 1000 user devices. Whereas examples of the present invention, with its simultaneous transmission of context signals and receipt of a superposition context signal, may reduce it to one round-trip time.

The superposition context signal is decomposed into its constituent context signals by using a machine learning mechanism/mathematical model to determine the respective context parameter values sent by each device. By transmitting the context signals simultaneously together in parallel in such a manner (rather than separately and independently in series), this may reduce the transmission time required for transmitting plural context signals from the plural devices thereby increasing the amount of available transmission time and resources for other wireless communication.

The determination of the individual sets of context parameter values for each user can be used to determine the respective set of context features of each user and hence each user's context, thereby enabling a determination of an aggregated view of the user contexts of the plurality of users. From this, one or more group of users within the plurality of users can be determined, wherein such groups comprise a set of users having the same/similar contexts. In such a manner, contextual grouping of users that are located at the same place, at the same time may be performed.

Examples of the present disclosure have been described with respect to the retrieval of context information via the simultaneous transmission of context signals representative of context parameter values, the reception of the same in a superposition context signal, and the determination of context parameter values therefrom. However, it is to be appreciated that examples of the disclosure are not limited to the retrieval of context information. Some examples of the disclosure may relate to the retrieval of other types of information via the simultaneous transmission of signals representative of parameter values, the reception of the same in a superposition signal, and the determination of parameter values therefrom.

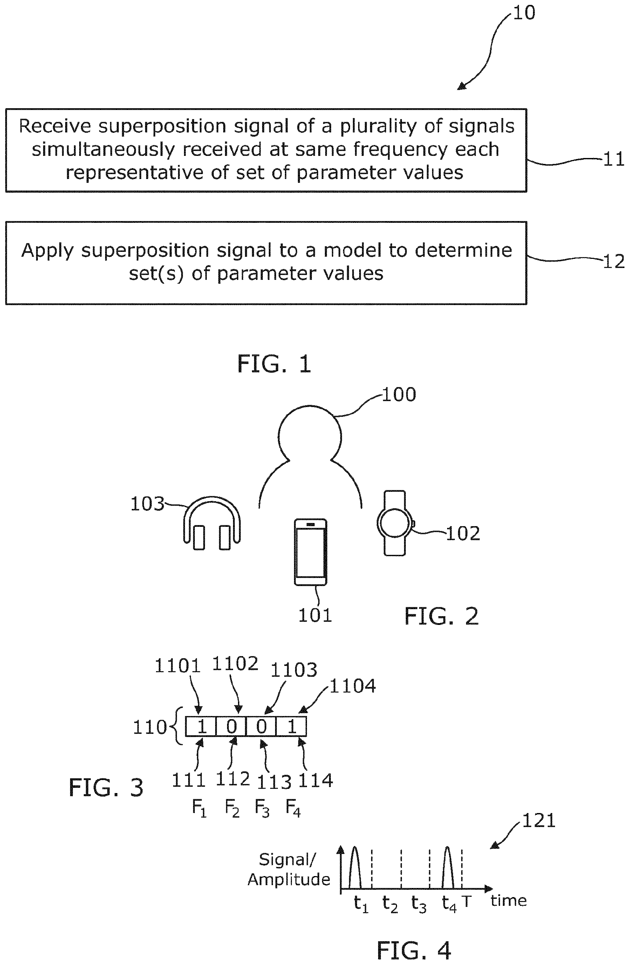

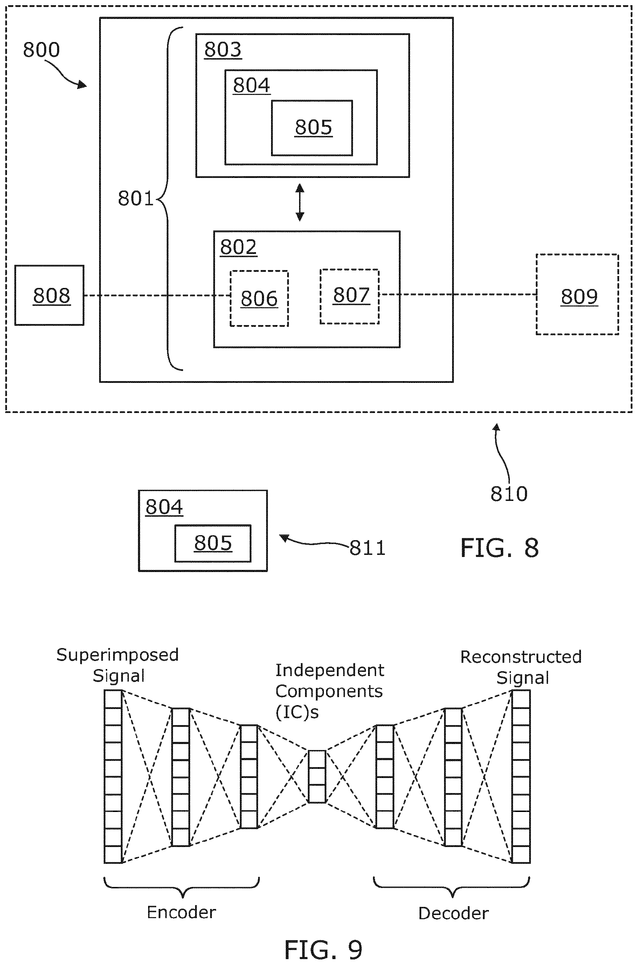

FIG 1 schematically illustrates a method 10 according to an example of the present disclosure. The component blocks of FIG 1 are functional and the functions described may or may not be performed by a single physical entity (such as is described with reference to FIG 8).

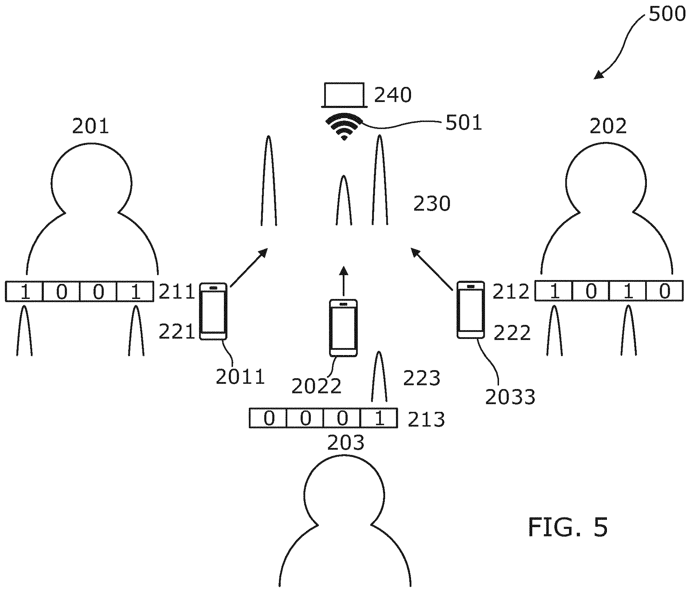

In block 11 a wireless superposition signal is received. The received superposition signal corresponds to the reception of a plurality of signals, received at a receiver substantially at the same time and substantially at same frequency, wherein each of the plurality of signals is representative of set of parameter values. As shown and discussed below with respect to FIG 5, the wireless superposition signal 230 received at the receiver 240 corresponds to the reception of the plurality of wireless signals 221,222,223 that are received substantially simultaneously at the same frequency. The plurality of wireless signals 221,222,223 are individually transmitted, substantially simultaneously and at the same frequency, from a respective plurality of devices 2011,2022,2033. Each signal 221,222,223 represents a set of parameter values 111,112,113,114 of a set of parameters 1101,1102,1103,1 104.

In block 12, the wireless superposition signal is applied to a model to determine one or more sets of parameter values from the received wireless superposition signal. The model is configured to receive, as an input, a wireless superposition signal comprising an aggregation of a plurality of signals each representative of a set of parameter values of a set of parameters. The model is also configured to output one or more sets of parameter values.

FIG 2 schematically illustrates an example of a user setup for use with examples of the present disclosure. A user 100 has a plurality of user devices: 101, 102 and 103 - i.e. Smartphone 101, Smartwatch 102 and Smart headset 103. These devices collectively capture (e.g. not least via one or more sensors thereon or based on the user's use of the devices) the user's context.

As used herein, the term "context" is a generic term that encompasses, for instance, at least the following examples: an activity, a state, a condition, a characteristic, an attribute and/or the like. The context may be user context, i.e. persona to a user. Context data/information may be captured by one or more devices, e.g. one or more user device(s) of a user. Context data may be based on raw sensor data, i.e. measurements from sensors not least for example one or more of: accelerometers and audio capture devices (e.g. microphones) of the user device(s). Such raw sensor data/measurement data may be processed to context data (e.g. processing accelerometer sensor measurements to determine a user context of a user walking). Context data may be based on a user's use of the user's one or more user devices, e.g. whether the device(s) is/are currently being used for, not least: telecommunication, A/V media content rendering, playing a game, surfing the net, using social media or messaging applications. In some examples, the user may have multiple devices that collaborate to determine user's context, though only one device may transmit the user's context.

The context may be defined via a plurality of individual context features. A context feature may be an element/component of the overall context, for examples a personal user activity context, not least such as: conversing, listening, walking, running, working out, sitting, engaging in online activity and so on. Each context feature may be defined in terms of a context parameter, the context parameter being configured to have one of a plurality of discrete values. In some examples, the context feature is a binary class of context feature having a yes/no state, i.e. the context parameter values associated with the context features having only two values/binary variables, wherein each binary variable (e.g. 1 or 0) represents the presence or absence of a context feature. For example, a user context feature of "sitting" has either a yes or no state - the user is either sitting or not. The context parameter associated with the context features of "sitting" has a context parameter value of 1 or 0 to represent the presence or absence of the context features, i.e. the user having a context of sitting or not.

As mentioned above, a user's context may comprise a plurality of context features that define the user's context. For example, a user may be: i) listening (to audio content), ii) sitting and iii) engaged in an online activity. Such a context may be defined by the set of three context features related to i), ii) and iii). Each context feature may be represented by a context parameter, having a context parameter value.

The set of context parameters (and their associated context parameters values) form a context vector (or context array). The context vector may be a data structure that comprising a plurality of context parameters that represent/define a context of a user. The context vector may be a set of a predetermined ordered sequence of context parameters in a bit array. Each context parameter (having a binary value of 0 or 1) of the ordered set of context parameters of the context vector is mapped onto/associated with a context feature of the user's context, such that the context vector thereby forms a bit array representing the user's context.

FIG 3 illustrates an example of a context vector 110 of a user. In this example, the context vector comprises four context parameters 1101,1102,1103,1104 each respectively representing a context feature F1,F2,F3,F4 of the user (though it is to be appreciated that any number of context parameters may be provided to represent any number of context features). Each context parameter has a respective context parameter value 111, 112,113,114.

In this particular example, the first context parameter 1101 represents a context feature F1 of whether the user 100 is in a conversation. The context parameter value 111 "1" indicates the affirmative/presence of the context feature F1, i.e. that the user is in a conversation. The next context parameter 1102 represents a context feature F2 of whether the user 100 is working out. The context parameter value 112 "0" denotes the negative/absence of the context feature F2, i.e. that the user is not working out. The context parameter 1103 represents a context feature F3 of whether the user 100 is walking. The context parameter value 113 "0" denotes the negative/absence of the context feature F3, i.e. that the user is not walking. Finally, the context parameter 1104 represents a context feature F4 of whether the user is engaged with an online activity. The context parameter value 114 "1" denotes the affirmative/presence of the context feature F4, i.e. that the user is engaged with an online activity.

Each context feature Fn is a binary class of context (i.e. a context characteristic either present or absent [e.g. walking yes/no], c.f. a quantised context [e.g. walking x km/hr]) whose associated context parameter can only adopt one of two values that respectively indicative of the presence or absence of the context feature represented by the context parameter. For example, if a user were in a conversation, the value 111 of context parameter 1101 would be equal to 1, and 0 otherwise. The context vector may thereby comprise a bit stream/ordered sequence of a plurality of bits (context parameter values) respectively representing a plurality of context parameters, each context parameter being associated with a context feature. In such a manner, a set of a plurality of context features Fn may be encoded in the context parameter values of a set of an ordered sequence of a plurality of context parameters of the context vector.

Instead of the context features being a binary class of context, and the associated context parameters only having one or two values, in some examples the context features may have a plurality of predetermined discrete classes (e.g. greater than 2) and the associated context parameters may likewise have a plurality of values (e.g. greater than 2). In such examples, for each class of context/context value for the same, a signal characteristic representative of the same is used that is distinguishable from other signal characteristics for representing other classes of context/context values for the same. For each class of values, a signal that is orthogonal to other classes may be used along with a receiver module that can separate the orthogonal signals.

FIG 4 schematically illustrates a context signal 121 representative of the context vector 110.

The context signal has a predetermined duration/period/frame T, and comprises a plurality of predetermined time slots/intervals/sub portions/subframes t1,t2,t3,t4 of a predetermined duration. Each time slot is associated with a context parameter, itself associated with a context feature.

In the context signal, a presence of a particular context feature is represented by a pulse of a predetermined amplitude in the time slot of the particular context parameter associated with the particular context feature.

An absence of a particular context feature is represented in the context signal by an absence of a pulse in the time slot of the particular context parameter associated with the particular context feature.

Each context signal may thereby comprise an ordered sequence of pulse/no-pulse in each time slot that respectively represent an ordered sequence of a plurality of context parameter values that correspond to a plurality of context features that define a context of a user.

In some examples the context signal is one or more of: an analogue signal (i.e. c.f. a digital signal comprising data packets comprising control information and user data/payload), a physical layer level signal, an ordered sequence of pulses/absence of pulses representative of a bit array, and a signal whose amplitude is controlled and adjusted to represent a bit array.

FIG 5 illustrates an example of a system 500 comprising a plurality of user devices 2011, 2022 and 2033 in the same area in the vicinity of a receiver 240. Each user device 2011, 2022 and 2033 captures/determines the context of its user and determines a context vector 211, 212 and 213 using the same.

The user devices 2011, 2022 and 2033 simultaneously transmit their respective user context signals 221,222 and 223 to the receiver at the same frequency, i.e. transmit one the same physical channel in the same time slot. Such simultaneously transmitted context signals from the user devices in the vicinity of the receiving node are simultaneously received by the receiver. Moreover, since the context signals are transmitted not only at the same time but also at the same frequency, the transmitted signals superpose one another such that what is received at the received is a wireless superposition signal comprising the three signals, received substantially simultaneously. The received superposition signal thereby represents an aggregated context of the plurality of users 201,202, 203 in the vicinity of the receiver 240.

The user devices communicate via a communications channel 501 and uses a common wireless communication network interface, e.g. not least such as Wi-Fi, to transmit their respective context signal.

The context aggregation may be initiated by receiver/node 240. The receiver broadcasts/transmits a context request message, which may comprise timing information (not least for example for: synchronising the transmission of the context signals from each user device, setting a duration of context signal, setting duration of each time slot, setting number of time slots, and setting which context feature/context parameter is to be associated with each time slot).

Upon receiving the request, each user device determines a context vector 211,212,213 for its user and transforms the same into a context signal 221, 222, 223 which is transmitted at the same time synchronously with the transmission of the context signals of the other user devices. When a context parameter in the user context vector is equal to 1, the user transmits an analogue signal (e.g. a pulse) and when the value of the feature is 0, the user does not transmit any signal (e.g. no pulse). Because the user devices transmit their context signals synchronously, due to the properties of the wireless medium, these signals overlap and superimpose on top each other. The superimposed signal 230 thereby represents a superimposition of context Signals 221, 222, 223 received at receiver 240.

As discussed above, the received superposed signal 230 represents a superimposed signal of the context signals 221,222,223 which were synchronised/simultaneously transmitted by the user devices of the users 201,202,203 in the same area in the vicinity of the receiver 240. Each user's context signal represents the user's set of context parameter values for the same sequential order of the set of context parameters of the context vector. Accordingly, the superimposed signal 230 may represent an aggregate view of the current context of all the users who are in the same area/location in the vicinity of receiver 240 at the same time.

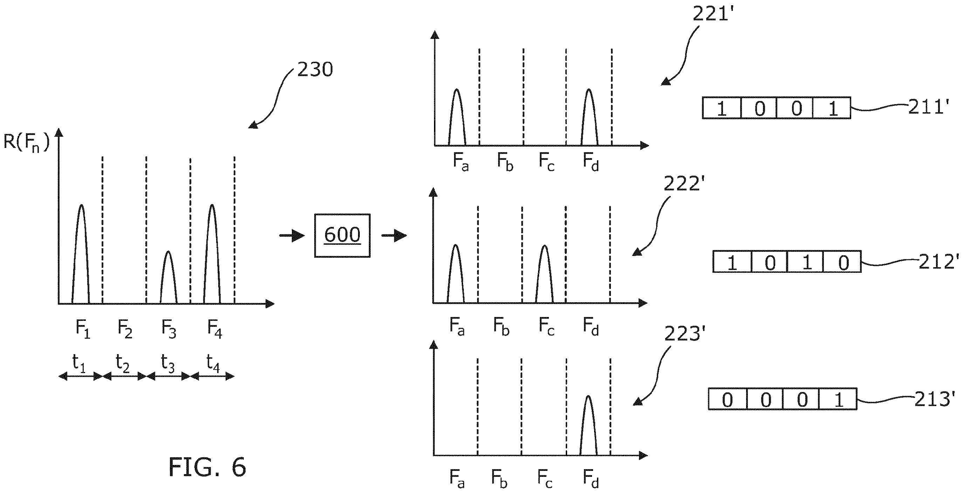

FIG 6 schematically illustrates the processing that the received superposed signal 230 undergoes to decompose/deconstruct the aggregated superposed signal 230 into its constituent parts to reconstruct the user context signals and hence determine the set of context parameter values represented thereby for each user so as to determine the context of each user in the area. The context of each user can thereby be used to determine the context of the plurality of users in the area. From this, a determination may also be made as to identify one or more groups of the plurality of users (i.e. identifying how many and/or which users belong in each group), such groups corresponding to a set of users who have the same contextual parameters values at the same time at the same location/area. In this regard, the receiver 240 employs machine learning mechanisms to distinguish the sets of context parameter values.

The superimposed context signal 230 comprises signal components $R(F_n)$ in each of the time slots associated with each context feature $F_n$.

The signal strength of each signal component $R(F_n)$ of the superimposed context signal for a particular context feature $F_n$ (i.e. a strength of each signal component of the superimposed context signal for each time slot $t_n$ of the superposed signal 230) can be expressed as:

$$R(F_n) = \sum_i c_i(F_n) RSSI_i$$

Where:

$R(F_n)$ corresponds to the signal strength of a signal component of a particular context feature $F_n$ of the superimposed context signal for

$c_i(F_n)$ corresponds to the context parameter value of the context parameter which is associated with context feature $F_n$ in user i's context vector, and

$RSSI_i$ corresponds to Received Signal Strength Indicator of user i

The receiver, can determine, receive and/or extract a transmission parameter, e.g. not least such as such as $RSSI_i$, by detecting other wireless communication signals/transmissions that the user devices are sending/receiving, e.g. due to other networking activities the user devices are performing such as data packet transmissions. By such 'sniffing' of the wireless medium, the receiver 240 can identify the average signal strength of each user as well as their identifier.

For example, in a Wi-Fi wireless communication network, the receiver 240 can achieve this by inspecting the 802.11 frame header of every header. Even though the payload of the data frames may be encrypted, the frame header is not encrypted. Therefore, by 'sniffing' the medium, receiver 240 can identify RSSI1, RSSI2, and RSSI3 which correspond to the signal strength of user devices 2011, 2022 and 2033.

The receiver 240 uses machine learning mechanisms to identify clusters of users. In some examples, the receiver 240 uses machine learning mechanisms to determine sets of $R(F_n)$ values and identify clusters of users using the same. In some examples, the receiver 240 uses machine learning mechanisms to identify, for each of the users, a set of $c_i(F_n)$ values. The sets of $c_i(F_n)$ values for the users can then be used to cluster users into groups.

In this example, where the users' devices are involved in other data communications, thereby enabling the receiver 240 to retrieve transmission parameters such as RSSI values and identifiers of the user devices (such identifiers also being able to assist in estimating a number of user devices in the vicinity) may be fed into the machine learning mechanism, i.e. as an input to the same, to enable users to be distinguished into separate groups.

In examples of the disclosure, instead of receiving contextual information for each user separately, the simultaneous synchronised reception of the context information is permitted to receive a superimposition of all the contexts at once. Examples of the present disclosure leverage the physical features of the wireless medium, namely the additive nature of wireless signals in a hertzian broadcast channel wherein concurrent wireless transmissions superimpose. Machine learning is then used, via a trained mathematical model, to deconstruct the received superimposed signal and reconstruct the context of each user.

Advantageously, examples of the disclosure may optimize the use of wireless resources by providing an efficient retrieval of context information from a plurality of users in a manner that may reduce the processing overhead of the wireless communication network and reduce overall transmission/reception time, thereby improving the capacity of the communication network to allocate resources to other wireless communications.

The determination of context information of each user of a plurality of users in the same area (i.e. within transmission/reception range of a receiver node) at the same time may enable to provision of customised services for the users.

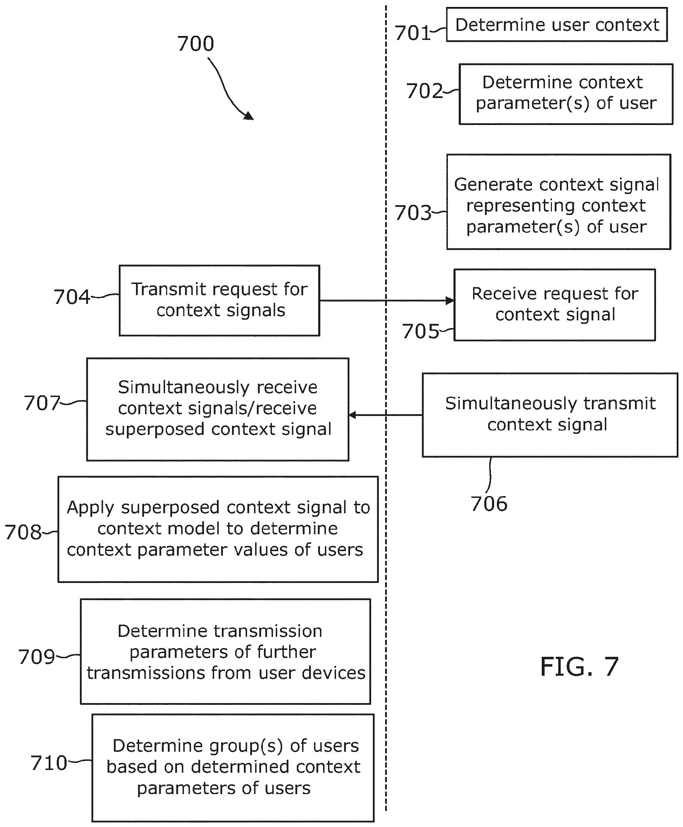

FIG 7 schematically illustrates an example of a method 700 according to the present disclosure. The method actions on the right-hand side of FIG 7 are those performed by each of the user devices 2011,2022,2033 whilst the method actions on the left-hand side are those performed by the receiver 240.

In block 701, each user device determines the context of its user. In block 702, a set of context parameter values are determined by each user device. The set of context parameter values may correspond to binary values of an ordered sequence of context parameters associated with a binary class of context features derived from the determined context. In block 703 a context signal, representing the set of context parameter values, is generated by each user device.

In block 704, the receiver transmits, to the user devices in the vicinity, a request for context signals.

In block 705, each user device in the vicinity receives the request and, in block 706, responsive to the same, each user device transmits its context signal simultaneously.

It is to be appreciated that one or more of blocks 701 - 703 could be performed before or after block 705. In some examples, one or more of blocks 701 - 703 are performed in response to block 705.

In block 707, the receiver receives, substantially simultaneously, the context signals from the user devices, i.e. the receiver receives a superposition context signal comprising the superimposed context signals from the user devices.

In block 708, the superposition context signal is applied to a model to determine a set of context parameter values of the users. In some examples, the model comprises one or more rules for determining a set of parameter values from the superposition signal. In some examples, the model is a mathematical model, generated via a machine learning system, that has been trained on data representative of sets of parameter values, so as to determine one or more correlations between characteristics/signal features of the superposition signal and sets of parameter values.

In block 709, the receiver determines additional information from one or more other transmissions of one or more of the plurality of devices in the vicinity, such as transmission parameters (e.g. not least RSSI and device identifiers) of additional contemporaneous transmissions made by the user devices. In some examples, such additional information is used in determining one or more parameter values of one or more users.

In block 710, the receiver determines one or more groups of users based on determined context parameters. In some examples, such a determination of group(s) of users comprises clustering the determined sets of parameter values, and clustering the users associated with the same into a group of users with one or more context parameter values the same and/or a similar set of context parameter values i.e. users in the same area (e.g. within wireless transmission range) with similar contexts - namely having a difference in their respective context parameter values being below a pre-determined threshold. The grouping may comprise determining a number of users in each group having similar contexts (i.e. not uniquely identifying each user of the group but merely determining the number of users from the plurality of users in the vicinity that are a member of the group). Alternatively, e.g. where transmission parameters have been determined including RSSI and device identifiers, specific individual users of each group may be identified.

The blocks illustrated in FIG 7 can represent actions in a method and/or sections of instructions/code in a computer program as well as hardware configured to perform the respective actions of the blocks.

For example, it will be understood that each block and combinations of blocks in FIG 7 associated with the receiver's actions can be implemented by various means, such as hardware, firmware, and/or software including one or more computer program instructions. For example, one or more of the procedures described above can be embodied by computer program instructions. In this regard, the computer program instructions which embody the procedures described above can be stored by a memory storage device and performed by a processor. Likewise, each block and combinations of blocks in FIG 7 associated with the user devices' actions can be implemented by various means, such as hardware, firmware, and/or software including one or more computer program instructions.

The flowchart of FIG 7 represents one possible scenario among others. The order of the blocks shown is not absolutely required, so in principle, the various blocks can be performed out of order, overlapping in time, in series or in parallel. Not all the blocks are essential. One or more blocks can be omitted or added or changed in some combination of ways.

FIG. 8 schematically illustrates an example of an apparatus 800 comprising a controller 801. The controller 801 is configured to receive input data/user input commands from one or more input devices 808 (e.g. not least a receiving antenna/transceiver) and is configured to provide output data/commands to one or more output devices 809 (e.g. not least a transmitting antenna/transceiver).

Implementation of the controller 801 can be as controller circuitry. Implementation of the controller 801 can be in hardware alone (for example processing circuitry comprising one or more processors and memory circuitry comprising one or more memory elements), have certain aspects in software including firmware alone or can be a combination of hardware and software (including firmware).

The controller can be implemented using instructions that enable hardware functionality, for example, by using executable computer program instructions in a general-purpose or special-purpose processor that can be stored on a computer readable storage medium (disk, memory etc.) or carried by a signal carrier to be performed by such a processor.

In the illustrated example, the apparatus 800 comprises a controller 801 which is provided by a processor 802 and memory 803. Although a single processor and a single memory are illustrated in other implementations there can be multiple processors and/or there can be multiple memories some or all of which can be integrated/removable and/or can provide permanent/semi-permanent/ dynamic/cached storage.

The memory 803 stores a computer program 804 comprising computer program instructions/code 805 that control the operation of the apparatus when loaded into the processor 802. The computer program instructions provide the logic and routines that enable the apparatus to perform the methods presently described (e.g. not least the receiver side methods of FIG 1 and FIG 7, or the user device side method of FIG 7).

The computer program instructions 805 are configured to cause the apparatus 800 at least to perform the method described, for example with respect to FIGS 1, and 7.

The processor 802 is configured to read from and write to the memory 803. The processor 802 can also comprise an input interface 806 via which data and/or commands are input to the processor 802, and an output interface 807 via which data and/or commands are output by the processor 802.

The apparatus 800 therefore comprises:

at least one processor 802; and

at least one memory 803 including computer program instructions 805;

the at least one memory and the computer program instructions configured to, with the at least one processor, cause the apparatus at least to perform:

receiving a wireless superposition signal, the wireless superposition signal comprising a plurality of wireless signals, received substantially simultaneously, that are individually transmitted from a respective plurality of devices substantially simultaneously and at the same frequency, wherein each signal represents a set of parameter values of a set of parameters;

determining one or more sets of parameter values from the received wireless superposition signal by applying the wireless superposition signal to a model, wherein the model is configured to:

receive, as an input, a wireless superposition signal comprising an aggregation of a plurality of signals each representative of a set of parameter values of a set of parameters, and

output one or more sets of parameter values.

The computer program can arrive at the apparatus 800 via any suitable delivery mechanism 811. The delivery mechanism 811 can be, for example, a non-transitory computer-readable storage medium, a computer program product, a memory device, a record medium such as a compact disc read-only memory, or digital versatile disc, or an article of manufacture that tangibly embodies the computer program 804. The delivery mechanism can be a signal configured to reliably transfer the computer program 804.

The apparatus 800 can receive, propagate or transmit the computer program 804 as a computer data signal.

As will be appreciated, any such computer program can be loaded onto a computer or other programmable apparatus (i.e., hardware) to produce a machine, such that the instructions when performed on the programmable apparatus create means for implementing the functions specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions specified in the blocks.

The apparatus 800 can, for example, be a server device, a client device, a mobile cellular telephone, a base station in a mobile cellular telecommunication system, a wireless communications device, a hand-portable electronic device etc. The apparatus can be embodied by a computing device, not least such as those mentioned above. However, in some examples, the apparatus can be embodied as a chip, chip set or module, i.e. for use in any of the foregoing.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The computer program instructions provide:

computer readable program means for receiving a wireless superposition signal, the wireless superposition signal comprising a plurality of wireless signals, received substantially simultaneously, that are individually transmitted from a respective plurality of devices substantially simultaneously and at the same frequency, wherein each signal represents a set of parameter values of a set of parameters;

computer readable program means for determining one or more sets of parameter values from the received wireless superposition signal by applying the wireless superposition signal to a model, wherein the model is configured to:

receive, as an input, a wireless superposition signal comprising an aggregation of a plurality of signals each representative of a set of parameter values of a set of parameters, and

output one or more sets of parameter values.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:

(a) hardware-only circuit implementations (such as implementations in only analog and/or digital circuitry) and

(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and

(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The apparatus can be provided in an electronic device, for example, a server or a mobile terminal, according to an exemplary embodiment of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples the apparatus can be provided in a mobile terminal, other types of electronic devices, such as, but not limited to, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The apparatus can be provided in a module. As used here 'module' refers to a unit or apparatus that excludes certain parts/components that would be added by an end manufacturer or a user.

In one example, the apparatus is embodied on a hand held portable electronic device, such as a mobile telephone, wearable computing device or personal digital assistant, that can additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. inbuilt) digital camera), and gaming functions.

FIG 9 schematically illustrates the training of a model for use in examples of the present disclosure.

As discussed above, examples of the disclosure use a Machine Learning (ML) mechanism to derive context information of users (context information of groups of users) from the received superimposed signal 230 by applying the superimposed signal to a trained mathematical model.

The training process involves receiving an input corresponding to a superimposed radio signal. The size of this input is the same as the context feature dimensionality (i.e. the number of context features represented in the context vector, i.e. n=4 in FIGs 3 and 5). In practice, this number would be much higher (e.g. or the order of: >20, 50>, >75 or >100).

Extracting user context information, i.e. a set of context parameter values and/or the user context signal representing the same, from the superimposed signal 230 is posed as a blind source separation problem, that is, given a set of additive signals (i.e. the superimposed signal 230 comprising a summation of the user context signals 221,222,223) is it possible to:

a) estimate how many sources (users) contributed to the superimposed signal?
and

b) what was the context signal of each constituent user?

Independent Component Analysis (ICA) is used as a technique to answer the above two questions. ICA works on two assumptions: i) the constituent signals (from individual users) are statistically independent and ii) they have non-Gaussian distributions (both of which requirements are satisfied with regards to the type of context signals used in examples of the present disclosure).

As shown in FIG 9, the ICA is trained using deep autoencoders. The model consists of an encoder which maps the input data (derived from the received superposition signal) into smaller feature representation which corresponds to the independent components. As the number of ICs (i.e. the number of users of the plurality of users) is not known a priori, a size of the IC layer is set to a reasonably high number (e.g., 15) which represents an estimate of a largest group size.

The training of the autoencoder (AE) works as follows. Training data is collected that consists of superimposed signals (such as 230) which are fed in to the AE as an input. The training data goes through the deep neural network and an output representation is obtained which corresponds to a reconstructed signal.

As usual with training AE, the reconstruction loss between the input signal and reconstructed signal is minimised as a way to learn robust feature representations for the ICA layer. Any distance metric could be used as a loss function. In one particular example, an L2 distance is used as the loss metric.

A second loss that is optimized is the IC loss, which ensures that the learned independent components are statistically independent of each other. This loss can be implemented using mutual information as a metric, wherein one aims to minimize the mutual information between the different ICs (and hence maximize their statistical independence).

After the training converges, the decoder model is discarded and only the encoder model is used for calculating ICs. The pre-trained encoder model is configured to accept a superimposed signal as input and generate as an output a vector corresponding to the ICs in the signal. This process is repeated for k steps so as to get a statistical estimate for each IC. ICs having a variance less than a given threshold, are associated with noise components and are discarded. All other ICs are interpreted as users in a group. This way, an estimate of the total number of users in the group can be estimated.

In order to determine the context features of each user, the decoder network is used. An input is fed into to the ICA layer (for example, if it were desired to know the context features for User 1, the ICA layer could be set to {1, 0, 0, 0 ... 0). Thereafter, this input passes through the decoder network and a reconstructed signal is obtained which only has the context features of User 1. This process can be repeated for all N users in the group.

Various, but not necessarily all, examples of the present disclosure can take the form of a method, an apparatus or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processors (including dual-core and multiple-core processors), processing circuitry or controller(s) such that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

The description of a function should additionally be considered to also disclose any means suitable for performing that function. Where a structural feature has been described, it can be replaced by means for performing one or more of the functions of the structural feature whether that function or those functions are explicitly or implicitly described.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims. For example, examples of the disclosure are not limited to the domain of retrieval of context information (i.e. are not limited to: context signals, context features, context parameters, context parameters value). Instead, the signals could relate to other types of information and other characteristics. For example, instead of context signals encoding context parameter values for context parameters representative of context features, there could be capability signals encoding capability parameter values for capability parameters representative of capability features. By way of example, another use case of examples of the disclosure relates to industrial automation. Consider a large number of mobile robots with different capabilities (i.e. features) that roam around in a factory or an industrial zone. The methods, apparatuses and systems of the present invention would be used to determine groups of robots having the same set of characteristics. By identifying robots having the same set of characteristics, this can enable such identified robots to be dispersed around the factory/industrial zone (rather than clustered together in an area). By preventing the robots with the same set of characteristics clustering together in the same location this may avoid redundancy in their robotic capabilities in such a location and may maximise the dispersement of the robots and their capabilities around the factory/industrial zone.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The systems, apparatus, methods and computer programs may use machine learning which can include statistical learning. Machine learning is a field of computer science that gives computers the ability to learn without being explicitly programmed. The computer learns from experience E with respect to some class of tasks T and performance measure P if its performance at tasks in T, as measured by P, improves with experience E. The computer can often learn from prior training data to make predictions on future data. Machine learning includes wholly or partially supervised learning and wholly or partially unsupervised learning. It may enable discrete outputs (for example classification, clustering) and continuous outputs (for example regression). Machine learning may for example be implemented using different approaches such as cost function minimization, artificial neural networks, support vector machines and Bayesian networks for example. Cost function minimization may, for example, be used in linear and polynomial regression and K-means clustering. Artificial neural networks, for example with one or more hidden layers, model complex relationship between input vectors and output vectors. Support vector machines may be used for supervised learning. A Bayesian network is a directed acyclic graph that represents the conditional independence of a number of random variables.

As used herein, "user" can, but need not, be used to refer to a user of a device associated with the user, e.g. a user device such as a user's smart phone or smart watch), or it may be used to refer to the user device itself.

Although various examples of the present disclosure have been described in the preceding paragraphs, with regards to a Wi-Fi wireless communication network and protocol, in other examples, other wireless standards may be used.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer and exclusive meaning.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

In the above description, the apparatus described can alternatively or in addition comprise an apparatus which in some other embodiments comprises a distributed system of apparatus, for example, a client/server apparatus system. In examples of embodiments where an apparatus provided forms (or a method is implemented as) a distributed system, each apparatus forming a component and/or part of the system provides (or implements) one or more features which collectively implement an example of the present disclosure. In some examples of embodiments, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

**Claims**

1. An apparatus (800,240) comprising means (801) configured to:

   receive a wireless superposition signal (230), the wireless superposition signal comprising a plurality of wireless signals (221,222,223), received substantially simultaneously, that are individually transmitted from a respective plurality of devices (2011,2022,2033) substantially simultaneously and at the same frequency, wherein each of the wireless signals represents a set of parameter values (111,112,113,114) of a set of parameters (11 01, 1102, 1103, 1104); determine one or more sets of parameter values from the received wireless superposition signal by applying the wireless superposition signal to a model generated by a machine learning system (600), wherein the model is configured to:

      receive, as an input, a wireless superposition signal comprising an aggregation of a plurality of wireless signals each representative of a set of parameter values of a set of parameters, wherein each parameter value is configured to adopt one of two values, wherein each of the plurality of wireless signals comprises:

         a set of time slots respectively associated with the set of parameters, and an analogue representation of the set of parameter values wherein:

            one of the two values for a parameter is represented by a transmission of a pulse of a predetermined amplitude in a time slot associated with the parameter, and the other of the two values for a parameter is represented by an absence of a transmission of a pulse in a time slot associated with the parameter value: and

      output one or more sets of parameter values (211',212',213',214').

2. The apparatus of claim 1, wherein the set of parameters is a set of a predetermined ordered sequence of parameters and wherein the set of the predetermined ordered sequence of parameters is the same for each of the plurality of wireless signals.

3. The apparatus of any previous claim, wherein one of the two values of the parameter value is indicative of the presence of a context feature, and the other of the two values of the parameter value is indicative of the absence of a context feature, wherein the context feature is indicative of an activity, a state, a condition, a characteristic, and/or an attribute of a user.

4. The apparatus of any previous claim, wherein the model is a mathematical model, that has been trained on data representative of sets of parameter values, so as to determine one or more correlations between features of the superposition signal and sets of parameter values.

5. The apparatus of any previous claim, further comprising means to determine one or more groups of users having one or similar parameter values.

6. The apparatus of any previous claim, wherein the wireless superposition signal is a superposed context signal comprising a plurality of wireless context signals received substantially simultaneously and at the same frequency that are individually transmitted/broadcasted from a respective plurality of devices substantially simultaneously and at the same frequency, wherein each context signal represents a set of context parameter values of a set of context parameters indicative of an activity, a state, a condition, a characteristic, and/or an attribute of a user; wherein the apparatus comprises means configured to determine one or more groups of users having one or more similar context parameter values.

7. The apparatus of any previous claim, comprising means configured to transmit, to the plurality of devices, a request for one or more signals, wherein the request comprises timing information for synchronising the transmission of the plurality of wireless signals from a respective plurality of devices.

8. The apparatus of any previous claim, comprising means configured to determine additional information from one or more other transmissions of one or more of the plurality of devices and using such additional information in determining one or more parameter values of one or more users.

9. A chipset, module or device comprising the apparatus of any of previous claims 1 to 8.

10. A method comprising causing actions that result in:

 receiving a wireless superposition signal (230),

the wireless superposition signal comprising a plurality of wireless signals (221,222,223), received substantially simultaneously, that are individually transmitted from a respective plurality of devices (2011,2022,2033) substantially simultaneously and at the same frequency, wherein each of the wireless signals represents a set of parameter values (111,112,113,114) of a set of parameters (110 1, 1102,1103,1104); determining one or more sets of parameter values from the received wireless superposition signal by applying the wireless superposition signal to a model generated via a machine learning system (600), wherein the model is configured to:

 receiving, as an input, a wireless superposition signal comprising an aggregation of a plurality of wireless signals each representative of a set of parameter values of a set of parameters, wherein each parameter value is configured to adopt one of two values, wherein each of the plurality of wireless signals comprises:

  a set of time slots respectively associated with the set of parameters, and an analogue representation of the set of parameter values wherein:

   one of the two values for a parameter is represented by a transmission of a pulse of a predetermined amplitude in a time slot associated with the parameter, and the other of the two values for a parameter is represented by an absence of a transmission of a pulse in a time slot associated with the parameter value; and

 outputting one or more sets of parameter values.

11. Computer program instructions which, when run on a computer, cause an apparatus to perform:

 receiving a wireless superposition signal (230), the wireless superposition signal comprising a plurality of wireless signals (221,222,223), received substantially simultaneously, that are individually transmitted from a respective plurality of devices (2011,2022,2033) substantially simultaneously and at the same frequency, wherein each of the wireless signals represents a set of parameter values (111,112,113,114) of a set of parameters (1101,1102,1103,1104); determining one or more sets of parameter values from the received wireless superposition signal by applying the wireless superposition signal to a model generated via a machine learning system, wherein the model is configured to:

receiving, as an input, a wireless superposition signal comprising an aggregation of a plurality of wireless signals each representative of a set of parameter values of a set of parameters, wherein each parameter value is configured to adopt one of two values, wherein each of the plurality of wireless signals comprises:

a set of time slots respectively associated with the set of parameters, and an analogue representation of the set of parameter values wherein:

one of the two values for a parameter is represented by a transmission of a pulse of a predetermined amplitude in a time slot associated with the parameter, and the other of the two values for a parameter is represented by an absence of a transmission of a pulse in a time slot associated with the parameter value; and

outputting one or more sets of parameter values.

**12.** A system comprising:

the apparatus of any of previous claims 1 to 8; and a plurality of further apparatuses comprising means configured to:

determine a context of a user, wherein the context comprises an activity, a state, a condition, a characteristic, and/or an attribute of the user; determine context parameter values of the user based on the determined context; generate a context signal, the context signal representing a set of context parameter values of a set of context parameters of a user, wherein each context parameter value is configured to adopt one of two values, wherein the context signal comprises:

a set of time slots respectively associated with the set of context parameters, and an analogue representation of the set of context parameter values wherein:

one of the two values for a context parameter is represented by a transmission of a pulse of a predetermined amplitude in a time slot associated with the context parameter, and the other of the two values for a context parameter is represented by an absence of a transmission of a pulse in a time slot associated with the context parameter value; and

transmit the context signal in response to receipt of a context signal request.

**Patentansprüche**

**1.** Einrichtung (800,240), die Mittel (801) umfasst, die zu Folgendem ausgelegt sind:

Empfangen eines drahtlosen Überlagerungssignals (230), wobei das drahtlose Überlagerungssignal eine Vielzahl von drahtlosen Signalen (221,222,223) umfasst, die im Wesentlichen gleichzeitig empfangen und von einer jeweiligen Vielzahl von Vorrichtungen (2011,2022,2033) im Wesentlichen gleichzeitig und mit derselben Frequenz einzeln übertragen werden, wobei jedes der drahtlosen Signale einen Satz von Parameterwerten (111,112,113,114) eines Satzes von Parametern (1101,1102,1103,1104) repräsentiert; Bestimmen von einem oder mehreren Sätzen von Parameterwerten anhand des empfangenen drahtlosen Überlagerungssignals durch Anwenden des drahtlosen Überlagerungssignals auf ein von einem Maschinenlernsystem (600) erzeugtes Modell, wobei das Modell zu Folgendem ausgelegt ist: Empfangen eines drahtlosen Überlagerungssignals, das eine Aggregation einer Vielzahl von drahtlosen Signalen umfasst, von denen jedes für einen Satz von Parameterwerten eines Satzes von Parametern repräsentativ ist, als eine Eingabe, wobei jeder Parameterwert dazu ausgelegt ist, einen von zwei Werten zu übernehmen, wobei jedes der Vielzahl von drahtlosen Signalen Folgendes umfasst:

einen Satz von Zeitschlitzen, die jeweils mit dem Satz von Parametern verknüpft sind, und eine analoge Repräsentation des Satzes von Parameterwerten, wobei:

einer der zwei Werte für einen Parameter durch eine Übertragung eines Impulses einer vorbestimmten Amplitude in einem mit dem Parameter verknüpften Zeitschlitz repräsentiert wird, und der andere der zwei Werte für einen Parameter durch ein Fehlen einer Übertragung eines Impulses in einem mit dem Parameterwert verknüpften Zeitschlitz repräsentiert wird; und
Ausgeben von einem oder mehreren Sätzen von Parameterwerten (211',212',213',214') .

2. Einrichtung nach Anspruch 1, wobei der Satz von Parametern ein Satz einer vorbestimmten sortierten Folge von Parametern ist und wobei der Satz der vorbestimmten sortierten Folge von Parametern für jedes der Vielzahl von drahtlosen Signalen derselbe ist.

3. Einrichtung nach einem der vorhergehenden Ansprüche, wobei einer der zwei Werte der Parameterwerte das Vorhandensein eines Kontextmerkmals anzeigt und der andere der zwei Werte der Parameterwerte das Fehlen eines Kontextmerkmals anzeigt, wobei das Kontextmerkmal eine Aktivität, einen Status, einen Zustand, eine Eigenschaft und/oder ein Attribut eines Benutzers anzeigt.

4. Einrichtung nach einem der vorhergehenden Ansprüche, wobei das Modell ein mathematisches Modell ist, das an Daten trainiert wurde, die für Sätze von Parameterwerten repräsentativ sind, um eine oder mehrere Korrelationen zwischen Merkmalen des Überlagerungssignals und Sätzen von Parameterwerten zu bestimmen.

5. Einrichtung nach einem der vorhergehenden Ansprüche, die ferner Mittel zum Bestimmen von einer oder mehreren Gruppen von Benutzern, die einen oder ähnliche Parameterwerte aufweisen, umfasst.

6. Einrichtung nach einem der vorhergehenden Ansprüche, wobei das drahtlose Überlagerungssignal ein überlagertes Kontextsignal ist, das eine Vielzahl von drahtlosen Kontextsignalen umfasst, die im Wesentlichen gleichzeitig und mit derselben Frequenz empfangen werden und von einer jeweiligen Vielzahl von Vorrichtungen im Wesentlichen gleichzeitig und mit derselben Frequenz einzeln übertragen bzw. mittels Broadcasting übermittelt werden, wobei jedes Kontextsignal einen Satz von Kontextparameterwerten eines Satzes von Kontextparametern repräsentiert, die eine Aktivität, einen Status, einen Zustand, eine Eigenschaft und/oder ein Attribut eines Benutzers anzeigen; wobei die Einrichtung Mittel umfasst, die dazu ausgelegt sind, eine oder mehrere Gruppen von Benutzern zu bestimmen, die einen oder mehrere ähnliche Kontextparameterwerte aufweisen.

7. Einrichtung nach einem der vorhergehenden Ansprüche, die Mittel umfasst, die dazu ausgelegt sind, eine Anforderung von einem oder mehreren Signalen zur Vielzahl von Vorrichtungen zu übertragen, wobei die Anforderung Timinginformationen zum Synchronisieren der Übertragung der Vielzahl von drahtlosen Signalen von einer jeweiligen Vielzahl von Vorrichtungen umfasst.

8. Einrichtung nach einem der vorhergehenden Ansprüche, die Mittel umfasst, die dazu ausgelegt sind, zusätzliche Informationen aus einer oder mehreren anderen Übertragungen von einer oder mehreren der Vielzahl von Vorrichtungen zu bestimmen, und diese zusätzlichen Informationen beim Bestimmen von einem oder mehreren Parameterwerten von einem oder mehreren Benutzern verwendet.

9. Chipsatz, Modul oder Vorrichtung, der bzw. das bzw. die die Einrichtung nach einem der vorhergehenden Ansprüche 1 bis 8 umfasst.

10. Verfahren, das das Bewirken von Aktionen umfasst, die in Folgendem resultieren:

   Empfangen eines drahtlosen Überlagerungssignals (230), wobei das drahtlose Überlagerungssignal eine Vielzahl von drahtlosen Signalen (221,222,223) umfasst, die im Wesentlichen gleichzeitig empfangen und von einer jeweiligen Vielzahl von Vorrichtungen (2011,2022,2033) im Wesentlichen gleichzeitig und mit derselben Frequenz einzeln übertragen werden, wobei jedes der drahtlosen Signale einen Satz von Parameterwerten (111,112,113,114) eines Satzes von Parametern (1101,1102,1103,1104) repräsentiert;
   Bestimmen von einem oder mehreren Sätzen von Parameterwerten anhand des empfangenen drahtlosen Überlagerungssignals durch Anwenden des drahtlosen Überlagerungssignals auf ein via ein Maschinenlernsystem (600) erzeugtes Modell, wobei das Modell zu Folgendem ausgelegt ist:
   Empfangen eines drahtlosen Überlagerungssignals, das eine Aggregation einer Vielzahl von drahtlosen Signalen umfasst, von denen jedes für einen Satz von Parameterwerten eines Satzes von Parametern repräsentativ ist, als eine Eingabe, wobei jeder Parameterwert dazu ausgelegt ist, einen von zwei Werten zu übernehmen, wobei jedes der Vielzahl von drahtlosen Signalen Folgendes umfasst:

      einen Satz von Zeitschlitzen, die jeweils mit dem Satz von Parametern verknüpft sind, und
eine analoge Repräsentation des Satzes von Parameterwerten, wobei:

einer der zwei Werte für einen Parameter durch eine Übertragung eines Impulses einer vorbestimmten Amplitude in einem mit dem Parameter verknüpften Zeitschlitz repräsentiert wird, und der andere der zwei Werte für einen Parameter durch ein Fehlen einer Übertragung eines Impulses in einem mit dem Parameterwert verknüpften Zeitschlitz repräsentiert wird; und
Ausgeben von einem oder mehreren Sätzen von Parameterwerten.

11. Computerprogrammanweisungen die, wenn sie auf einem Computer laufen, bewirken, dass eine Einrichtung Folgendes durchführt:

Empfangen eines drahtlosen Überlagerungssignals (230), wobei das drahtlose Überlagerungssignal eine Vielzahl von drahtlosen Signalen (221,222,223) umfasst, die im Wesentlichen gleichzeitig empfangen und von einer jeweiligen Vielzahl von Vorrichtungen (2011,2022,2033) im Wesentlichen gleichzeitig und mit derselben Frequenz einzeln übertragen werden, wobei jedes der drahtlosen Signale einen Satz von Parameterwerten (111,112,113,114) eines Satzes von Parametern (1101,1102,1103,1104) repräsentiert;
Bestimmen von einem oder mehreren Sätzen von Parameterwerten anhand des empfangenen drahtlosen Überlagerungssignals durch Anwenden des drahtlosen Überlagerungssignals auf ein via ein Maschinenlernsystem erzeugtes Modell, wobei das Modell zu Folgendem ausgelegt ist:
Empfangen eines drahtlosen Überlagerungssignals, das eine Aggregation einer Vielzahl von drahtlosen Signalen umfasst, von denen jedes für einen Satz von Parameterwerten eines Satzes von Parametern repräsentativ ist, als eine Eingabe, wobei jeder Parameterwert dazu ausgelegt ist, einen von zwei Werten zu übernehmen, wobei jedes der Vielzahl von drahtlosen Signalen Folgendes umfasst:

einen Satz von Zeitschlitzen, die jeweils mit dem Satz von Parametern verknüpft sind, und
eine analoge Repräsentation des Satzes von Parameterwerten, wobei:

einer der zwei Werte für einen Parameter durch eine Übertragung eines Impulses einer vorbestimmten Amplitude in einem mit dem Parameter verknüpften Zeitschlitz repräsentiert wird, und der andere der zwei Werte für einen Parameter durch ein Fehlen einer Übertragung eines Impulses in einem mit dem Parameterwert verknüpften Zeitschlitz repräsentiert wird; und
Ausgeben von einem oder mehreren Sätzen von Parameterwerten.

12. System, das Folgendes umfasst:

die Einrichtung nach einem der vorhergehenden Ansprüche 1 bis 8; und
eine Vielzahl von weiteren Einrichtungen, die Mittel umfassen, die zu Folgendem ausgelegt sind:

Bestimmen eines Kontextes eines Benutzers, wobei der Kontext eine Aktivität, einen Status, einen Zustand, eine Eigenschaft und/oder ein Attribut des Benutzers umfasst;
Bestimmen von Kontextparameterwerten des Benutzers auf Basis des bestimmten Kontextes;
Erzeugen eines Kontextsignals, wobei das Kontextsignal einen Satz von Kontextparameterwerten eines Satzes von Kontextparametern eines Benutzers repräsentiert, wobei jeder Kontextparameterwert dazu ausgelegt ist, einen von zwei Werten zu übernehmen, wobei das Kontextsignal Folgendes umfasst:

einen Satz von Zeitschlitzen, die jeweils mit dem Satz von Kontextparametern verknüpft sind, und
eine analoge Repräsentation des Satzes von Kontextparameterwerten, wobei:

einer der zwei Werte für einen Kontextparameter durch eine Übertragung eines Impulses einer vorbestimmten Amplitude in einem mit dem Kontextparameter verknüpften Zeitschlitz repräsentiert wird, und
der andere der zwei Werte für einen Kontextparameter durch ein Fehlen einer Übertragung eines Impulses in einem mit dem Kontextparameterwert verknüpften Zeitschlitz repräsentiert wird; und
Übertragen des Kontextsignals in Reaktion auf den Empfang einer Kontextsignalanforderung.

**Revendications**

1. Appareil (800, 240) comprenant des moyens (801) configurés pour :

recevoir un signal de superposition sans fil (230), le signal de superposition sans fil comprenant une pluralité de signaux sans fil (221, 222, 223) reçus sensiblement simultanément qui sont transmis individuellement à partir d'une pluralité respective de dispositifs (2011, 2022, 2033), sensiblement simultanément et à la même fréquence, dans lequel chacun des signaux sans fil représente un jeu de valeurs de paramètres (111, 112, 113, 114) d'un jeu de paramètres (1101, 1102, 1103, 1104) ;
déterminer un ou plusieurs jeux de valeurs de paramètres à partir du signal de superposition sans fil reçu en appliquant le signal de superposition sans fil à un modèle généré par un système d'apprentissage machine (600), dans lequel le modèle est configuré pour :

recevoir, comme entrée, un signal de superposition sans fil comprenant une agrégation d'une pluralité de signaux sans fil représentant chacun un jeu de valeurs de paramètres d'un jeu de paramètres, dans lequel chaque valeur de paramètre est configurée pour adopter l'une des deux valeurs, dans lequel chacun de la pluralité de signaux sans fil comprend :

un jeu de créneaux horaires respectivement associés au jeu de paramètres, et
une représentation analogique du jeu de valeurs de paramètres où :

l'une des deux valeurs pour un paramètre est représentée par la transmission d'une impulsion d'une amplitude prédéterminée dans un créneau horaire associé au paramètre, et
l'autre des deux valeurs pour un paramètre est représentée par l'absence de transmission d'une impulsion dans un créneau horaire associé à la valeur de paramètre ; et

délivrer un ou plusieurs jeux de valeurs de paramètres (211', 212', 213', 214').

2. Appareil de la revendication 1, dans lequel le jeu de paramètres est un jeu de séquences ordonnées prédéterminées de paramètres, et dans lequel le jeu de séquences ordonnées prédéterminées de paramètres est le même pour chacun de la pluralité de signaux sans fil.

3. Appareil de l'une des revendications précédentes, dans lequel l'une des deux valeurs de la valeur de paramètre indique la présence d'une fonctionnalité contextuelle, et l'autre des deux valeurs de la valeur de paramètre indique l'absence d'une fonctionnalité contextuelle, dans lequel la fonctionnalité contextuelle indique une activité, un état, une condition, une caractéristique et/ou un attribut d'un utilisateur.

4. Appareil de l'une des revendications précédentes, dans lequel le modèle est un modèle mathématique qui a été entraîné sur des données représentatives de jeux de valeurs de paramètres, de manière à déterminer une ou plusieurs corrélations entre des fonctionnalités du signal de superposition et des jeux de valeurs de paramètres.

5. Appareil de l'une des revendications précédentes, comprenant en outre des moyens pour déterminer un ou plusieurs groupes d'utilisateurs ayant une ou des valeurs de paramètres similaires.

6. Appareil de l'une des revendications précédentes, dans lequel le signal de superposition sans fil est un signal de contexte superposé comprenant une pluralité de signaux de contexte sans fil reçus sensiblement simultanément et à la même fréquence qui sont transmis/diffusés individuellement à partir d'une pluralité respective de dispositifs, sensiblement simultanément et à la même fréquence, dans lequel chaque signal de contexte représente un jeu de valeurs de paramètres de contexte d'un jeu de paramètres de contexte indiquant une activité, un état, une condition, une caractéristique et/ou un attribut d'un utilisateur ; dans lequel l'appareil comprend des moyens configurés pour déterminer un ou plusieurs groupes d'utilisateurs ayant une ou plusieurs valeurs de paramètres de contexte similaires.

7. Appareil de l'une des revendications précédentes, comprenant des moyens configurés pour transmettre, à la pluralité de dispositifs, une demande d'un ou plusieurs signaux, dans lequel la demande comprend des informations de temporisation pour synchroniser la transmission de la pluralité de signaux sans fil à partir d'une pluralité respective de dispositifs.

8. Appareil de l'une des revendications précédentes, comprenant des moyens configurés pour déterminer des informations supplémentaires à partir d'une ou plusieurs autres transmissions d'un ou plusieurs de la pluralité de dispositifs, et utiliser ces informations supplémentaires pour déterminer une ou plusieurs valeurs de paramètres d'un ou plusieurs utilisateurs.

9. Jeu de puces, module ou dispositif comprenant l'appareil de l'une des revendications précédentes 1 à 8.

10. Procédé comprenant la provocation des actions qui aboutissent à :

recevoir un signal de superposition sans fil (230), le signal de superposition sans fil comprenant une pluralité de signaux sans fil (221, 222, 223) reçus sensiblement simultanément qui sont transmis individuellement à partir d'une pluralité respective de dispositifs (2011, 2022, 2033), sensiblement simultanément et à la même fréquence, dans lequel chacun des signaux sans fil représente un jeu de valeurs de paramètres (111, 112, 113, 114) d'un jeu de paramètres (1101, 1102, 1103, 1104) ;
déterminer un ou plusieurs jeux de valeurs de paramètres à partir du signal de superposition sans fil reçu en appliquant le signal de superposition sans fil à un modèle généré via un système d'apprentissage machine (600), dans lequel le modèle est configuré pour :

recevoir, comme entrée, un signal de superposition sans fil comprenant une agrégation d'une pluralité de signaux sans fil représentant chacun un jeu de valeurs de paramètres d'un jeu de paramètres, dans lequel chaque valeur de paramètre est configurée pour adopter l'une des deux valeurs, dans lequel chacun de la pluralité de signaux sans fil comprend :

un jeu de créneaux horaires respectivement associés au jeu de paramètres, et
une représentation analogique du jeu de valeurs de paramètres où :

l'une des deux valeurs pour un paramètre est représentée par la transmission d'une impulsion d'une amplitude prédéterminée dans un créneau horaire associé au paramètre, et
l'autre des deux valeurs pour un paramètre est représentée par l'absence de transmission d'une impulsion dans un créneau horaire associé à la valeur de paramètre ; et

délivrer un ou plusieurs jeux de valeurs de paramètres.

11. Instructions de programme informatique qui, lorsqu'elles sont exécutées sur un ordinateur, amènent un appareil à réaliser :

la réception d'un signal de superposition sans fil (230), le signal de superposition sans fil comprenant une pluralité de signaux sans fil (221, 222, 223) reçus sensiblement simultanément qui sont transmis individuellement à partir d'une pluralité respective de dispositifs (2011, 2022, 2033), sensiblement simultanément et à la même fréquence, dans lesquelles chacun des signaux sans fil représente un jeu de valeurs de paramètres (111, 112, 113, 114) d'un jeu de paramètres (1101, 1102, 1103, 1104) ;
la détermination d'un ou plusieurs jeux de valeurs de paramètres à partir du signal de superposition sans fil reçu en appliquant le signal de superposition sans fil à un modèle généré via un système d'apprentissage machine, dans lesquelles le modèle est configuré pour :

recevoir, comme entrée, un signal de superposition sans fil comprenant une agrégation d'une pluralité de signaux sans fil représentant chacun un jeu de valeurs de paramètres d'un jeu de paramètres, dans lesquelles chaque valeur de paramètre est configurée pour adopter l'une des deux valeurs, dans lesquelles chacun de la pluralité de signaux sans fil comprend :

un jeu de créneaux horaires respectivement associés au jeu de paramètres, et
une représentation analogique du jeu de valeurs de paramètres où :

l'une des deux valeurs pour un paramètre est représentée par la transmission d'une impulsion d'une amplitude prédéterminée dans un créneau horaire associé au paramètre, et
l'autre des deux valeurs pour un paramètre est représentée par l'absence de transmission d'une impulsion dans un créneau horaire associé à la valeur de paramètre ; et

délivrer un ou plusieurs jeux de valeurs de paramètres.

12. Système comprenant :

l'appareil de l'une des revendications précédentes 1 à 8 ; et

une pluralité d'appareils supplémentaires comprenant des moyens configurés pour :

déterminer le contexte d'un utilisateur, dans lequel le contexte comprend une activité, un état, une condition, une caractéristique et/ou un attribut de l'utilisateur ;

déterminer des valeurs de paramètres de contexte de l'utilisateur sur la base du contexte déterminé ;

générer un signal de contexte, le signal de contexte représentant un jeu de valeurs de paramètres de contexte d'un jeu de paramètres de contexte d'un utilisateur, dans lequel chaque valeur de paramètre de contexte est configurée pour adopter l'une des deux valeurs, dans lequel le signal de contexte comprend :

un jeu de créneaux horaires respectivement associés au jeu de paramètres de contexte, et

une représentation analogique du jeu de valeurs de paramètres de contexte dans lequel :

l'une des deux valeurs pour un paramètre de contexte est représentée par la transmission d'une impulsion d'une amplitude prédéterminée dans un créneau horaire associé au paramètre de contexte, et l'autre des deux valeurs pour un paramètre de contexte est représentée par l'absence de transmission d'une impulsion dans un créneau horaire associé à la valeur de paramètre de contexte ; et

transmettre le signal de contexte en réponse à la réception d'une demande de signal de contexte.

10

Receive superposition signal of a plurality of signals simultaneously received at same frequency each representative of set of parameter values ——11

Apply superposition signal to a model to determine set(s) of parameter values ——12

FIG. 1

100

103

101    102

FIG. 2

1101  1102  1103
            1104

110 { | 1 | 0 | 0 | 1 |

111 112 113 114
$F_1$  $F_2$  $F_3$  $F_4$

FIG. 3

121

Signal/
Amplitude

$t_1$ $t_2$ $t_3$ $t_4$ T   time

FIG. 4

FIG. 5

FIG. 6

EP 3 783 819 B1

700

701 — Determine user context

702 — Determine context parameter(s) of user

703 — Generate context signal representing context parameter(s) of user

704 — Transmit request for context signals

705 — Receive request for context signal

707 — Simultaneously receive context signals/receive superposed context signal

706 — Simultaneously transmit context signal

708 — Apply superposed context signal to context model to determine context parameter values of users

709 — Determine transmission parameters of further transmissions from user devices

710 — Determine group(s) of users based on determined context parameters of users

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUN FUQIANG et al.** Deep Learning Based Joint Detection and Decoding of Non-Orthogonal Multiple Access Systems. IEEE, 2018